# EUROPEAN PATENT APPLICATION

(11) **EP 1 583 010 A1**
(43) Date of publication of application: **05.10.2005**
(21) Application number: 03025450.2
(22) Date of filing: 05.11.2003
(51) Int. Cl.: G06F 17/60

(54) **System and method for controlling resource group transfers**

(71) Applicant: DEUTSCHE BÖRSE AG, 60487 Frankfurt am Main (DE)
(72) Inventor: Naas, Marcel c/o Eurex Repo GmbH, 60485 Frankfurt/Main (DE); Hartung, Gerd, Dr., 60487 Frankfurt/Main (DE)
(74) Representative: Grünecker, Kinkeldey, Stockmair & Schwanhäusser Anwaltssozietät

(57) **Abstract**

A resource management system and method is provided for controlling the transfer of groups of resources. The system comprises an input unit for receiving transfer instructions. The transfer instructions specify a transfer of a group of resources by constituting a definition indicating at least one class of resources and at least one condition under which, after the transfer has been completed, a reverse transfer of the same group of resources or another group of resources within the same at least one class of resources has to occur. The system further comprises a resource specification unit for investigating the definition and allocating individual resources for the transfer that meet at least one class of resources indicated by the investigated definition. The invention is particularly applicable to repo basket transactions.

## Description

### BACKGROUND OF THE INVENTION

### 1. Field of the Invention

The present invention generally relates to systems and methods for controlling resource group transfers, and more particularly to transfers of a group of resources which are defined in association with a condition under which, after the transfer has been completed, a reverse transfer of the same or a similar group of resources has to occur.

### 2. Description of the Related Art

Such resource group transfers may take place in various technical fields. For example, resources may be memory resources in computer systems, and such memory resources may be allocated groupwise for some reasons. Other examples relate to the allocation of processing time as resources in, e.g., distributed network systems. In such systems, any resource allocation may be made dependent on a condition under which a reverse transfer of the same or a similar group of resources has to occur. However, prior art systems are often disadvantageous in that the definition of such transfers is usually rather complex and of no or low flexibility. Further, the resource allocation is found to be cumbersome and difficult, and is often the reason why such systems may exhibit severe unreliability situations.

Another field where the invention may be applied to, are financial trading, clearing and settlement systems, and more particular the trading, clearing and settlement of collateralised money (credit) contracts in the repo (repurchase agreement) market.

A Repurchase Agreement (repo) is the sale of securities by one party (the seller of securities or cash taker) to another (the buyer of securities or cash provider) with the added conditions that those securities or those similar to it will be resold at a given price at a specified future date. In terms of the security aspects there are two main types of repos that can be differentiated: General Collateral (GC) repos and Special repos. A GC repo defines the sell/buy of a basket of securities, a Special repo contract implies a specific security. Securities of the same quality are grouped to a basket. For instance, a German government basket consists of securities with the quality German government bonds. The credit default risk of a security is the dominant grouping criteria.

The repo participants of a GC repo trade agree on a credit risk or credit rating of a security basket. A single repo contract is legally embedded in a legal repo master agreement between the two repo parties. Within a specific repo trade the contracting partners agree on: sell or buy of securities, security or basket of securities, nominal amount (size of security/basket), purchase date, repurchase date, and repo rate (interest rate between start and closing period).

The type and quality of the traded securities are in principal a negotiation topic between the repo contract partners, in practice most of the repo traded securities are bonds with high credit ratings.

The repo transactions can further be grouped by the trading motivation into a funding or cash driven and security driven group.

Basically when the cash funding aspects of a repo trade are in the foreground, the trading participants agree to deliver a basket of securities (GC repo) instead of a specific security (Special repo). The basic intention of a GC repo trade is to fund the cash requirements on a low interest rate (repo rate). Concerning the cash flow perspective a repo basket transaction is similar to a loan contract with a fixed interest payment at the end of the credit period and defined loan collaterals. A GC basket with a high creditworthiness (low credit default risk) ensures a favourable credit term on the repo market.

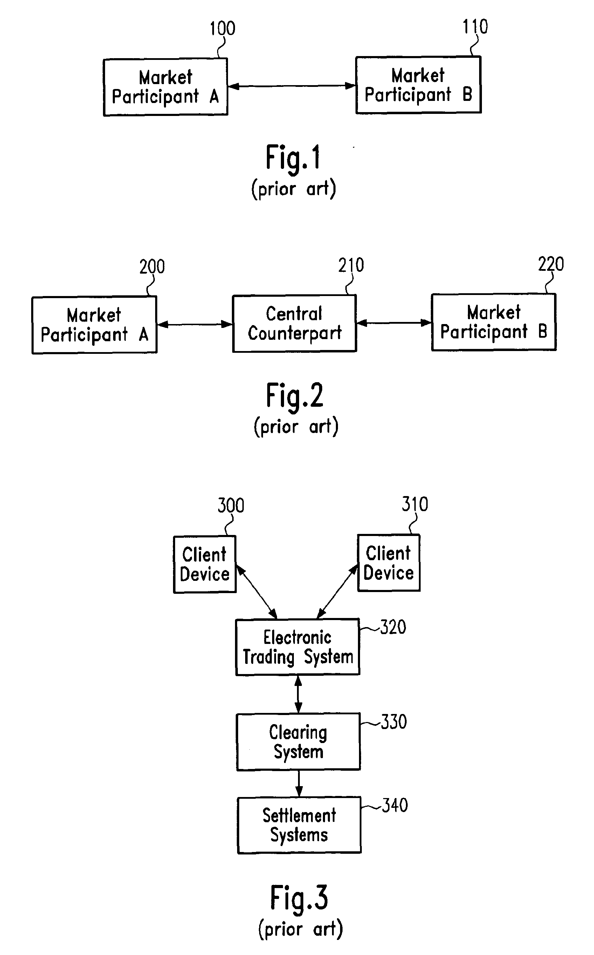

Discussing now the repo market organisation, the repo market participants are mostly commercial banks and/or institutional investors in the short-term capital market (money market segment). The repo market is either organised bilaterally, i.e. repo participants 100, 110, 200, 220 trade directly over phone with each other (as shown in the conceptional representation of FIG. 1), or anonymously and standardized via the electronic platforms of an institutional trading system and clearing house 210 (for high-level abstraction see FIG. 2).

In case of a standardized market organisation via a trading system and clearing house organisation, as shown in FIG. 3, the electronic trading system 320 acts in general as an independent information broker whereby the clearing house 210 acts as a central counterparty in order to reduce counterparty risk. Therefore the typical trading workflow is structured such that the market participants 200, 220, 300, 310 quote e.g. a repo basket within an anonymous and public quote book of the electronic trading system. As soon as a market participant accepts one of the binding quotes the clearing house 210, 330 steps in the repo contract. If a clearing house 210, 330 acts as an central counterparty the dedicated trade participants dispose an obligation only against the clearing house. After the trading (and clearing) processes the repo trades are settled within a security and cash custody organisation 340.

The mentioned settlement organisation 340 embraces various institutions: a central security depository (CSD) that stores physically the securities and manage the corresponding property rights assignment within their account system; a corresponding security custodian that participates on the CSD account system (a corresponding custody bank is not necessary if the repo participant holds a CSD account); a corresponding cash custodian that participates on the centralised payment and cash account system (typically the repo banks and CSD holds directly payment and billing accounts within the central bank account system); and settlement departments inside the banks that supervise and manage the movements on their cash and security accounts.

The trading workflows arrange the mutual agreements process between the repo partners, and the settlement cycles assure the physical fulfilment on the committed contracts. In the following, the repo basket trading via a trading organisation is described in more detail.

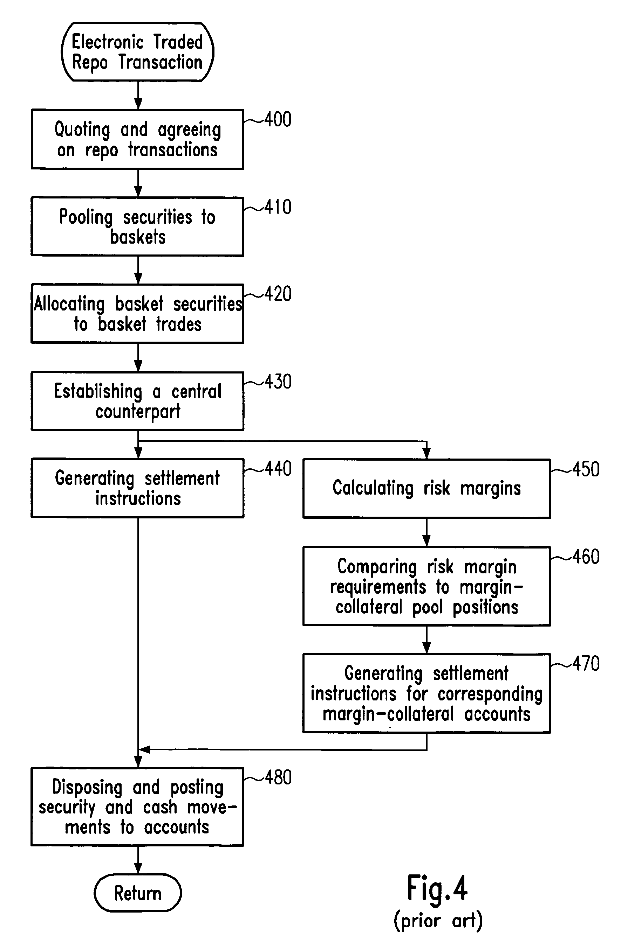

FIG. 4 illustrates how conventional systems perform traded repo transactions.

Banks assess their financial requirements (either in cash or securities) within their internal position keeping systems. To fund short positions the repo basket trader has to assure the availability of suitable collateral. To ensure the right collateral quality and quantity several steps 410, 420 have to be performed by each trading member: validate the actual positions of available securities; group the securities into the collateral types; and assign and allocate collateral to the dedicated repo basket definition.

First, there is an initial step 400 where the repo trader starts the negotiation and funding process. One market participant quotes for a basket offer, and another participant agrees to the transaction. Then, the securities are pooled from the existing collaterals in step 410, and allocated to basket trades in step 420. The pooling process 410 receives as input parameters the sum of all available collateral/security stocks. These are then grouped according to the respective basket criteria. The pooling step 410 then outputs the basket structures containing the securities. In the allocation step 420, the securities of the respective baskets are allocated in accordance with the basket definition. Allocation takes place as long as the nominal of the intended repo transaction or quoting is not yet reached.

After balancing the collateral positions, bid and ask offerings are published and finally accepted via an electronic trading platform.

The clearing house 210, 330 acts as a central counterparty for all repo trades. By replacing the original counterparties in a repo trade, the central counterpart assumes all the credit risk exposure. The workflow is organized in a way that two market participants agree on the contract details published on exchange, the trade details are transmitted to the clearing system, and the clearing system closes on the basis of the origin trade details laterally reversed contracts with the repo participants and provides the corresponding deal confirmations (step 430).

Following the deal closure, the clearing house 210, 330 generates settlement instructions from the trade details in step 440. These settlement instructions are then used in the settlement process or system to start the process 480 of disposing the accounts of the central security depository for clearing members with respect to the resulting security credit or debit situation, and posting the securities in the general ledger as well as initiating the cash movements to the accounts.

It is to be noted that the clearing members need not necessarily be the market participants (or trade participants) themselves. In cases where the clearing members are different entities, the generation of settlement instructions may become more complex.

Further, a risk margin may be calculated in step 450 in order to cover the clearing house credit risk against their trade counterparties. The risk margin requirements are compared in step 460 to margin-collateral pool positions. The clearing system 210, 330 then generates on the basis of the deal details the settlement instructions for corresponding margin-collateral accounts in step 470.

Within the clearing organisation each single security position of a repo basket is processed like an independent repo trade. Therefore a repo basket trade with e.g. five different underlying securities results into five separate and independent repo trades and settlement instructions

Also just after the repo deals are finalised, the contract participants (clearing house 210, 330 and market participant 300, 310) generate the corresponding settlement instruction and instruct their cash and security correspondence to settle the dedicated cash and security movements. For example if repo market participants "A" and "B" agree on a repo trade that"A" (cash taker) receive a cash credit from "B" (cash provider) respectively "A" delivers a basket of securites (as collateral) to "B" the settlement process and instruction for the purchase transaction would be like: "A" delivers the dedicated securities to the clearing house; the clearing house transfers the cash amount (credit) in favour of "A"; the clearing house delivers the securities further to "B", and "B" transfers the cash amount to the clearing house.

The settlement structure of the repurchase transaction is laterally reversed to the purchase structure. That is, the double-ended arrows in FIGs. 1 and 2 are intended to illustrate the credit (and interest) flow in one direction and the security flow in the other direction, for both the purchase leg and the repurchase leg.

The structure of the described settlement cycle follows a delivery versus payment (DVP) method. DVP settlement incorporates an interdependence between the cash and security settlement cycles and starts typically with the delivery of the security side. The advantages of a DVP settlement within a clearing house structure consist out of an improved settlement guaranty for the market participants because of the central role of the clearing house and their high creditworthiness. The disadvantages of a DVP process results out of the different time schedule of the cash and security settlement cycles. A mismatch of timing is basically founded on the technical organisation of bulk processing within the cash and security settlement cycles. Typically the cash settlement cycles are much more flexible or near-time organised than the security settlement cycles.

As in the memory and processing time examples discussed above, the main disadvantage of the prior art repo techniques is that the definition of such transfers is usually rather complex and of insufficient flexibility. Further, the security allocation is often cumbersome and difficult.

### SUMMARY OF THE INVENTION

It is the object of the invention to provide an improved resource management system and method for controlling the transfer of groups of resources, that may overcome the disadvantages of the prior art techniques.

This object is solved by the invention as claimed in the independent claims.

Preferred embodiments are defined by the dependent claims.

According to one embodiment, there is provided a resource management system for controlling the transfer of groups of resources. The system comprises an input unit for receiving transfer instructions. The transfer instructions specify a transfer of a group of resources by constituting a definition indicating at least one class of resources and at least one condition under which, after the transfer has been completed, a reverse transfer of the same group of resources or another group of resources within the same at least one class of resources has to occur. The system further comprises a resource specification unit for investigating the definition and allocating individual resources for the transfer that meet at least one class of resources indicated by the investigated definition.

According to another embodiment, a resource management method of controlling the transfer of groups of resources comprises receiving transfer instructions specifying a transfer of a group of resources by constituting a definition indicating at least one class of resources and at least one condition under which, after the transfer has been completed, a reverse transfer of the same group of resources or another group of resources within the same at least one class of resources has to occur, investigating the definition, and allocating individual resources for the transfer that meet the at least one class of resources indicated by the investigated definition.

According to yet another embodiment, a repo basket transaction system is provided that comprises a trading system connected to receive repo quotes from market participants. The repo quotes specify a repo basket transaction by constituting a security basket definition indicating a security amount and at least one class of securities. The system further comprises a settlement system connected to receive settlement instructions relating to repo basket transactions. The settlement system comprises a securities pooling and allocation unit adapted to investigate the security basket definition relating to a repo basket transaction and allocate at least one individual security that meets at least one class of securities indicated by the investigated security basket definition.

According to still another embodiment, there is provided a settlement system capable of being operated in the repo basket transaction system. The settlement system is connected to receive settlement instructions relating to repo basket transactions specified by constituting a security basket definition indicating a security amount and at least one class of securities. The settlement system comprises a securities pooling and allocation unit adapted to investigate the security basket definition relating to a repo basket transaction and allocate at least one individual security that meets at least one class of securities indicated by the investigated security basket definition.

According to a further embodiment, a repo basket transaction method is provided that comprises receiving repo quotes from market participants. The repo quotes specify a repo basket transaction by constituting a security basket definition indicating a security amount and at least one class of securities. The method further comprises investigating the security basket definition relating to the repo basket transaction, and allocating at least one individual security according to given settlement amounts. The at least one individual security meets at least one class of securities indicated by the investigated security basket definition.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating the principle of a bilaterally organized repo trade;
FIG. 2 is a block diagram illustrating the principle of a traded repo trade;
FIG. 3 is a block diagram illustrating the process areas and data flows of a conventional traded repo transaction;
FIG. 4 is a flow chart illustrating the workflow of a conventional traded repo transaction performed in the system of FIG. 3;
FIG. 5 is a block diagram illustrating the process areas and data flows of a traded repo transaction in a pool trading system according to a preferred embodiment of the invention;
FIG. 6 is a block diagram illustrating in more details the components of the collateral management system that is part of the pool trading system of FIG. 5;
FIG. 7 is a flow chart illustrating the workflow of a traded repo transaction performed in the system of FIG. 5, according to a preferred embodiment of the invention; and
FIG. 8 is a block diagram illustrating an extension of the pool trading system of FIG. 5 enabling online operation.

### DETAILED DESCRIPTION OF THE INVENTION

The illustrative embodiments of the present invention will be described with reference to the figure drawings wherein like elements and structures are indicated by like reference numbers.

According to the embodiments, the transfer of groups of resources is initiated by transfer instructions. The transfer instructions specify the transfer of a group of resources by constituting a definition indicating at least one class of resources and at least one condition under which, after the transfer has been completed, a reverse transfer of the same group of resources or another group of resources within the same at least one class of resources has to occur. That is, the group is not specified by defining the individual resources but by defining one or more classes of resources. This group definition then allows for processing the group as single "synthetic" resource in much the same way as a common resource.

According to the embodiments, a central resource specification unit investigates the definition and allocates individual resources for the transfer that meet the class definition. Thus, the resource allocation is no longer be done decentralized in the various transfer instructions, but by a central entity in the course of processing the defined groups.

While not limited to the example of resource groups being repo baskets, the following embodiments will focus on the field of processing repo basket transactions.

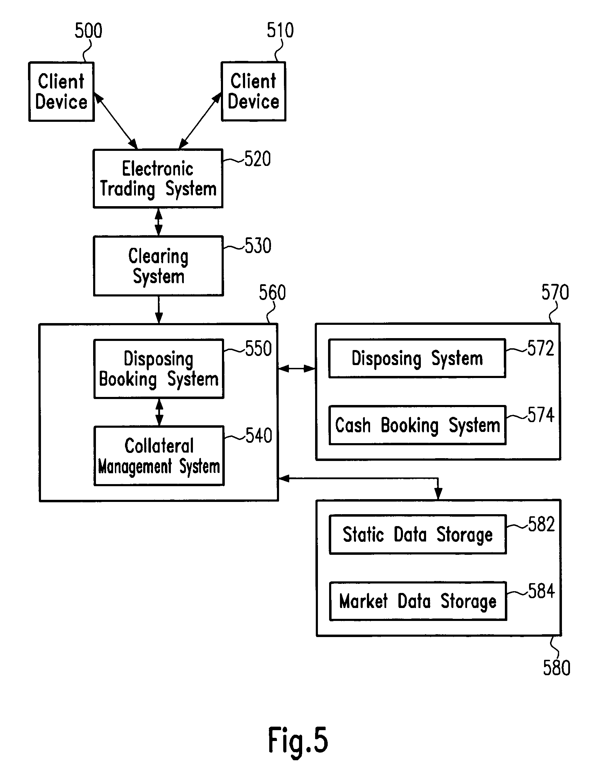

As will be more apparent from the following description, these embodiments target to improvements of the cash funding facilities of the repo market by improvements in the basket handling and collateral management within GC repo workflow. The repo basket trading constitutes the development of a trading, clearing and settlement infrastructure as shown in FIG. 5 which is capable to process a "synthetic" basket security.

As will be described in more detail below, the functional set up according to the embodiments is enhanced by three additional elements:
- a synthetic security as collateral basket,
- a centralised allocation function, and
- earmarking as novel settlement function.

In context of the repo business a synthetic security is developed to define a generic (collateral) basket. The synthetic security represents a defined security quality or class of securities. As mentioned above the common security classes within the repo market may be government bonds, mortgaged bonds and bonds issued by public law corporations.

A centralised allocation function is used to allocate specific securities to a collateral basket or synthetic security. This function is relocated from the workflow environment of the trading departments to the centralised settlement environment.

Earmarking describes a process where security positions are posted in favour of the beneficiary without booking the dedicated repo participant's general ledger accounts.

Turning now to FIG. 5, a block diagram is provided illustrating the process areas and data flows of a traded repo transaction according to a preferred embodiment of the invention. Market participants operate client devices 500, 510 to make quotes and lift/hit quotes. Such transfer instructions may include repo basket definitions containing class information. Unlike in the prior art of FIG. 3, the electronic trading system 520 is now capable of dealing with such transfer instructions. Further, also the clearing system 530 is adapted to handle the novel kind of transaction definitions.

The centralised allocation function mentioned above is then mainly realized by a settlement system 560 which comprises a disposition and booking system 550 and a collateral management system 540. The disposition and booking system 550 receives and identifies the settlement instructions, and transfers the identified settlement instructions to the collateral management system 540 for earmarking purposes.

The settlement system 560 is generally arranged to perform disposition of securities as well as cash movements. When booking securities, the disposition and booking system 550 uses internal booking procedures which administer the security positions. When booking cash movements, the disposition and booking system 550 merely uses some mirroring accounts. The final cash booking is done in an external (but connected) cash settlement system 570 which comprises a disposing system 572 and a cash booking system 574.

The settlements system 560 may further interact with a central security core/market data system 580 that comprises a static data storage 582 and a market data storage 584.

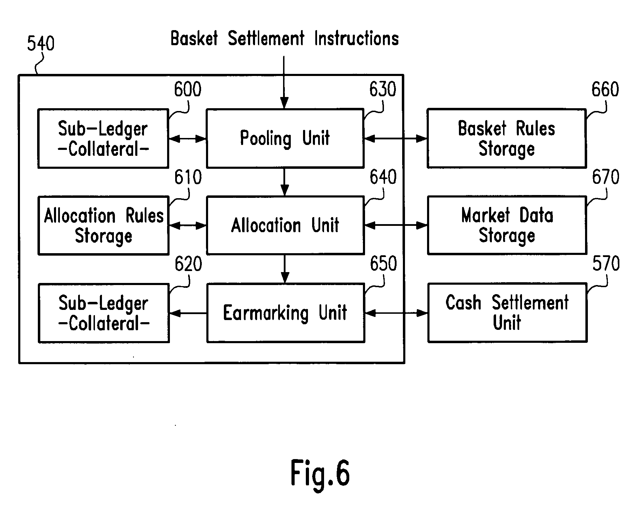

The collateral management system 540 is depicted in more detail in FIG. 6 as comprising a pooling unit 630, an allocation unit 640, and an earmarking unit 650. The pooling unit 630 has access to a collateral sub-ledger 600. The allocation unit 640 has access to an allocation rules storage 610. Units 630 and 640 may be understood to form a resource specification unit that handles the pooling as well as the actual allocation. The earmarking unit 650 is capable of creating and accessing a collateral sub-ledger 620.

The central pooling unit 630 receives the basket settlement instructions and selects and groups securities from the collateral pool 600 of the respective market participant in accordance with the traded synthetic basket as identified by the input parameters. For this purpose, the pooling unit 630 may import basket definitions from the basket criteria/rules storage 660 and retrieve the available collaterals of the participant. It is to be noted that the collateral pool 600 may include available entries of the collateral account of the participant as well as those entries which have been earmarked for this participant.

The allocation unit 640 receives from the pooling unit 630 data indicating the basket qualified part of the collaterals. Further, the allocation unit 640 receives allocation rules from storage 610. In addition, the allocation unit 640 receives the value of the repo instruction, i.e., the trade volume of the repo transaction.

Using the allocation rules for the collaterals, the allocation unit 640 generates a priority list of the used securities. Then, the allocation unit 640 allocates the available and qualified collaterals to the requested settlements amounts. For this purpose, the collaterals are valued based on market prices as retrieved from the market data storage 670. Allocation stops when the requested settlements amount is adjusted to the market prices of the cumulated collaterals.

The allocation unit 640 outputs to the earmarking unit 650 information on the securities, and allocation instructions which indicate the security volume to be allocated. The earmarking unit 650 adds to the securities unique informatin indicating the respective security ownership. The earmarking initiates booking the earmarking transfers, i.e. the respective securities, to the sub-ledger account 620. This includes referencing of securities which have been transferred by earmarking, to the original owner or collateral account.

It is to be noted that by implementing a central contractor, two independent (sale and purchase) settlement instructions are generated relative to the central contractor. For instance, one market participant transfers a security to the central contractor, and the central contractor transfers the security to the other market participant. Of course, the cash flow is organized similarly, but in the other direction. The settlement of security transactions preferrably starts with the security transfer to the central contractor, i.e. one market participant transfers a security to the central contractor, and the central contractor transfers cash back. Then, the central contractor transfers the security to the other market participant, and the other market participant transfers cash back to the central contractor. That is, the collateral of the selling market participant, i.e., the cash taker, is earmarked to the security account of the central contractor in a first step, and is then earmarked to the security account of the other market participant, i.e. the purchaser of cash provider, in a second step. It is to be noted that both earmarking steps may be performed in sequence but without notable time delays.

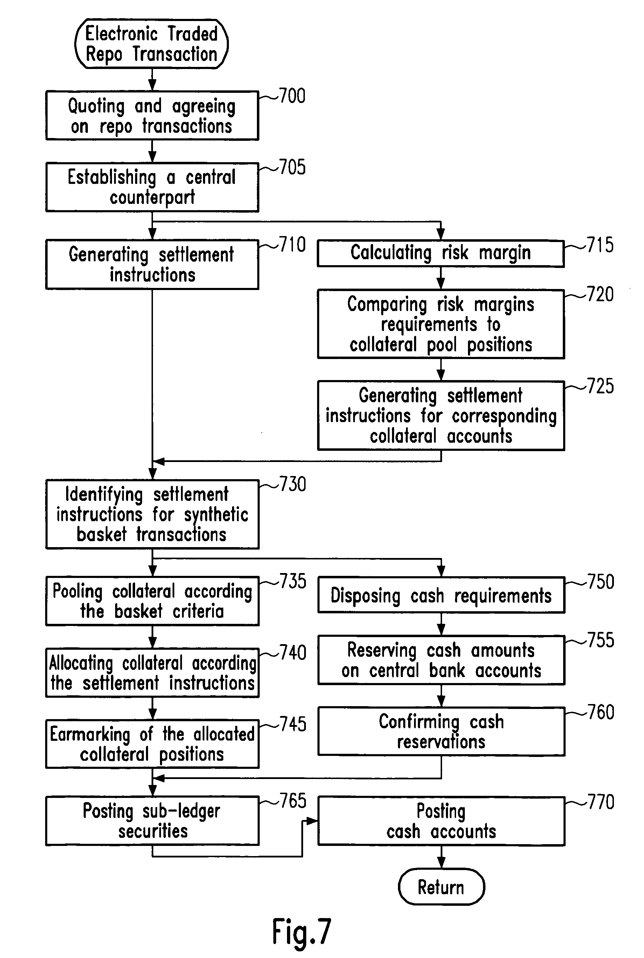

The operation of the various units shown in FIGs. 5 and 6 will become apparent from the following description with reference to FIG. 7.

As apparent from FIG. 7 when compared with FIG. 4, there are no initial pooling and allocation steps 410, 420 in the present embodiment. Rather, the process directly continues with steps 705-725 which substantially correspond to steps 430-470 of the conventional process shown in FIG. 4. Further, it is apparent that the final step 480 of disposing and posting securities and performing cash movements to accounts in the process of FIG. 4 is replaced by a novel procedure (steps 730-770) which also handles the pooling and the allocation.

As may be seen from FIG. 7, this procedure starts with identifying the settlement instructions for the respective synthetic basket transactions in step 730. Then, the process may be split to separately handle the securities in steps 735-745, and the cash flow in steps 750-760. This separation is similar to the split between step 710 (or 440) and steps 715-725 (or 450-470).

In detail, the securities processing comprises the pooling of the collaterals according to the basket criteria in step 735, the allocation of the collaterals according to the settlement instructions in step 740, and the earmarking of the allocated collateral positions in step 745. The cash settlement comprises the step 750 of disposing the cash requirements, the step 755 of reserving cash amounts on central bank accounts, and the step 760 of confirming the cash reservations. Finally, the sub-ledger securities are posted in step 765, and the cash accounts are posted in step 770.

To summarize the GC pooling workflow design of the present embodiment, this environment provides to the repo industry the opportunity to trade a collateral basket like a synthetic security. The basket is processed throughout the value chain as a single security.

Within the described process organisation, a repo trader 500, 510 defines only the intended security class in form of a generic basket instead of a bunch of single securities (step 700). The trading platform 520 transfers the repo basket deal details to the clearing environment 530. The clearing house 530 steps in the repo contracts as a central counterparty and generates deal confirmations for the delivery and/or acceptance of a synthetic security (step 710). Hereafter the risk margins will be calculated in step 715 on the basis of the synthetic security (basket). Within the risk calculation process, the risk profile of a synthetic security is treated as an average risk profile of the dedicated security class.

The settlement process is activated by the settlement instructions. The settlement instructions are produced in steps 710 and 725 out of the clearing process and instruct a delivery versus payment in reference to the defined synthetic security (basket) transaction. Within the settlement process, securities which meet the required security quality will be allocated in step 740 out of eligible security or collateral pool of the repo participant 500, 510.

This allocation method performed in unit 640 manages the allocation of securities into the basket automatically based on standardised rules 610. The allocation process uses a security (collateral) pool 600, 630 which is preferrably defined in advance by the dedicated settlement departments of the banks. These collateral pools are defined in general for collateralised trading.

After the allocation process is finished, the defined security positions are earmarked in step 745. The Earmarking process performed in unit 650 creates a sub-ledger 620 and post the security movements of a generic basket settlement in the sub-ledger 620 in step 765. The technical workflow of managing the sub-ledger accounts is independent from the general ledger workflows which is managed within the existing settlement process. Therefore, the sub-ledger posting and processing is independent from the existing settlement time schedules on the general ledger accounts. The earmarking process incorporates a full passage of the title and can be processed on a real time or at least near time basis.

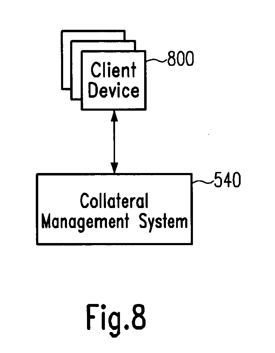

Referring to FIG. 8, in another embodiment of the invention, the collateral management system 540 may be connected to one or more client devices 800 for allowing participants in the backoffice or in collateral management departments of the participating banks to obtain information with respect to the GC pooling online, and/or to input data for controlling the process. The clients 800 may generate substitution instructions and issue these instructions to the collateral management system 540. A substitution instruction may generally be used for substituting blocked securities for available and qualified securities. Blocked securities in this context are securities which have already been allocated and earmarked. A substitution instruction may comprise at least an identification of the securities to be substituted and the respective volume.

Referring now back to FIG. 6, allocation rules are stored in storage unit 610. The purpose of the rules is to allow allocating free and eligible securities which can be secured. Allocation rules may also serve the opposite function, i.e the release of allocated securities.

The process may be to follow certain sorting criteria and may be triggered by certain client events. It may also be run during an overnight batch processing as a result of the re-evaluation of allocated securities.

The automatic allocation may consist of three functional subitems namely its algorithm, its information storage for documentational reasons, and its being triggered by (later on defined) events. In addition, the non-functional requirements may be referenced as another subitem.

In the selection algorithm, each automatic allocation process may be followed by an automatic release process in order to reduce an unnecessary overcoverage and to release non-eligible securities. The automatic release process may be such that it must never lead to an undercoverage or increase of an existing undercoverage. Further, the allocation algorithm may be such that it must only choose among the free securities which are eligible.

As for the release algorithm, the allocated securities which are not eligible at the processing time may be considered as having security value 0. In an embodiment, if and only if the covering ratio of the claim to be secured is greater than or equal to 100%, these collaterals must be released automatically.

In the following, the sorting criteria of the present embodiment are described in more detail. For the automatic release process holds/is valid, and within the amount criterion, the sorting hierarchy may prefer the securities for which the security value, a multiple of the lowest tradable unit, fits best (i.e. the security value is smaller but as close as possible to) the current overcoverage. This multiple may be released in each step. Whenever two securities are equally ranked, the one with the highest security identification number may be chosen. The release of securities with security value 0 may always precede the release of securities with positve security value.

The amount criterion may be the first criterion for the allocation process. For each selection step, the allocation algorithm may prefer the free eligible collateral, the securitiy value of which fits the undercover. Its own inner criteria may be the exact coverage, the minimization of the overcoverage, and the minimization of the undercoverage.

For the exact coverage criteria, the allocation process may prefer free eligible securities which meet exactly the current undercoverage (i.e. the undercoverage in each step). If more than one collateral satisfy this criterion, the process may choose the one with the lowest security identification number.

For the minimize overcoverage criteria, among all free eligible securities which have a security value which is greater than the current undercoverage, the process may prefer the collateral with which the smallest possible overcoverage is reached regarding each collaterals lowest tradable unit. This need not be the one with the smallest lowest tradable unit. For example, if the undercoverage is 999 EUR there may be two eligible securities both with a security value greater than 999 EUR. For security A, the lowest tradeable unit is for instance 1, and the price is 700 EUR. For security B, the lowest tradeable unit is for instance 100, and the price is 10 EUR. For security A the overcoverage would be 401 EUR, for security B it would be 1 EUR. In this case security B would be allocated. Generally, if more than one collateral satisfy the minimize overcoverage criterion, the process may choose the one with the lowest security identification number.

For the minimize undercoverage criteria, among all free eligible securities which have a security value smaller than the current undercoverage of the claim to be secured, the automatic allocation may choose the one with the biggest security value. If more than one collateral satisfy this criterion, the process may choose the one with the lowest security identification number.

The automatic allocation may end when either there is no undercoverage or the security pool does not contain free eligible securities any more. If there is sufficient coverage or overcoverage after the automatic allocation, the automatic release process may be triggered (see below), whereas in the latter case when there is still an undercoverage, the automatic process may need to change the relevant amount, i.e., the global amount.

The automatic release process may end when the overcoverage cannot be reduced any more regarding the lowest tradable unit of the allocated securities.

Depending on the security identification number, the automatic allocation process may reduce the free nominal value of the collaterals to be allocated while it creates new allocations or increases the allocated nominal value depending on the security identification number. In case of releases, the process may increase the free nominal value und decrease the allocated nominal. If the allocated nominal value has decreased to 0, the allocation may be deleted.

If a collateral loses its eligibility, its security value may be set to 0. Allocated securities may only be released if there is sufficiently coverage.

If the automatic allocation process fails to provide a sufficient coverage, it may reduce the global amount to the sum of security values over all collaterals which are currently allocated. The global amount reduction by the automatic allocation process may result in a new version, and may be reported through the special reports.

At the end of each complete automatic allocation or release process, the covering ratio may be updated automatically.

In the following, automatic allocation triggers are described in more detail. These triggers are in the present embodiment that securities become securable, and that there is a periodical re-evaluation.

A non-historic version may become securable when it enters a predefined state and the re-evaluation detects an undercoverage. This trigger may include the "lifting" to a contract's new version. An undercoverage may occur for the first version, when the global-amount has been increased, a haircut for an allocated security has been increased, or simply the value of an allocated security has fallen.

In the periodical re-evaluation, if a nightly re-evaluation of collaterals detects an undercoverage, the automatic allocation may be invoked upon it.

Besides automatic allocation triggers, there may be automatic release triggers. These triggers are in the present embodiment that securities become securable, there is an automatic allocation, and there is a periodical re-evaluation. The functions and conditions of these triggers are similar to the automatic allocation triggers described above.

The changes to the security pool may be documented in detail. Since no client changes may be possible, the automatic process' results may be shown analogously to the results due to the manual allocation and release. Hence the automatic process may result in allocation instructions which are created and controlled automatically by the system.

The allocation instructions may sum up the actions (i.e. allocations or releases) due to the allocation or release process. If the sum of all allocations or releases chosen by the automatic process is greater than a predefined value, the process may create more than one allocation instruction, because the number of transaction positions per allocation instruction is limited to this predefined value. The predefined value may for instance be 50.

Since the automatic release may possibly rely on the results of the automatic allocation, allocations and releases may result in disjoint allocation instructions. Thus, allocations and releases may then never be reported together in a single instruction.

After the instruction has been created, it may be controlled, executed and set to historic automatically by the system. The allocation instructions created by the automatic process may be marked as automatic allocation or release instructions by setting each action's user information to a predetermined user-id.

The automatically created instructions may be given an instruction number which is greater than or equal to one and smaller than or equal to a predefined maximum number, which is, e.g., 799999. These numbers must be unique for the predetermined user-id among all non-historical booking and allocation intructions numbers created by this user-id. All automatic allocation and release instructions may be numbered starting from one each day.

The reports and views created for the manual allocation or release process may also be used for the automatic allocation. The distinction between manual and automatic allocations is possible by the predetermined user-id for creation and control whenever these fields are displayed.

As mentioned above, the clearing unit 530 performs, inter alia, the generation 710, 725 and management of settlement instructions. In an embodiment, the settlement instruction generation process comprises a mechanism to split settlement instructions into two or more settlement instructions of smaller value. For instance, if the value of a settlement instruction that is to be generated would exceed a predefined threshold, e.g. 50,000,000.00 euro, a number of settlement instructions will be generated that are each of smaller values below or equal to this threshold. In the present embodiment, the split mechanism generates as many settlement instructions of the threshold value as needed, and one final settlement instruction for the remaining amount, if any.

In a further embodiment, the prices of the electronic trading platform 520 are delivered in realtime to a price distribution tool for processing the data and sending the processed data to external data dealers. The price distribution tool may contain the following functions: a quote listener, a quote and/or data manager, and a quote and/or data distributor. The quote listener rebuilds the quote book logic to determine the best quote using predefined rules, to handle virtual listings, and to generate cancellation messages. The quote/data manager consolidates the quotes or data to conform with a generic data format, and provides for recover capabilities. The quote/data distributor generates primary keys representing logic listings, divides the markets and currencies, and introduces purchase and repurchase dates as part of the identifying primary keys, thereby generating a logic listing.

For example, there may be about 90.000 combinations of purchase/repurchase dates for a GC security, but only a small number of such combinations are posted, for example 300 each. Each day, 300 new combinations are added, and 300 existing combinations are rendered impossible. While generally usable for quotes, this mechanism can be used for trades as well.

In the present embodiment, bid and ask quotes are traded in separate order books. Based on the order book in logic listings, the best item is selected in accordance with the respective rules, such as price, volume, and seniority. This can be done in close analogy to the respective determination in the electronic trading system.

As an alternative, calculations can be made on the basis of individual logic listings, such as the sum of all quotes, or a weighted average. The generation of the market depth can be based on the logic listings. Further, other possible schemes are, e.g, yield curves where prices relating to the same terms or currencies (e.g. two weeks) can be considered and consolidated at several time instances (e.g. two weeks starting tomorrow, or two weeks starting next month).

The following is a list of preferred embodiments of the invention:
E1. A repo basket transaction system comprising:
   a trading system (520, 530) connected to receive repo quotes from market participants (500, 510), the repo quotes specifying a repo basket transaction by constituting a security basket definition indicating a security amount and at least one class of securities; and
   a settlement system (540-570) connected to receive settlement instructions relating to repo basket transactions;
   wherein said settlement system comprises a securities pooling and allocation unit (630, 640) adapted to investigate the security basket definition relating to a repo basket transaction and allocate at least one individual security that meets at least one class of securities indicated by the investigated security basket definition.
E2. The repo basket transaction system of embodiment E1, wherein said security basket definition indicating a security amount and at least one class of securities is adapted not to indicate individual securities of said class.
E3. The repo basket transaction system of embodiment E1 or E2, wherein said securities pooling and allocation unit is further adapted to allocate said at least one individual security based on predefined rules.
E4. The repo basket transaction system of embodiment E3, wherein said predefined rules are standardized general settlement rules or market participant specific rules.
E5. The repo basket transaction system of embodiment E3 or E4, wherein said settlement system further comprises a storage (600) for storing data indicating said at least one individual security in association with data indicating said at least one class of securities, and said securities pooling and allocation unit is adapted to access said storage when allocating said at least one individual security based on said predefined rules.
E6. The repo basket transaction system of embodiment E5, wherein said storage is arranged for storing said data in market participant specific memory regions, and said association is a market participant specific association.
E7. The repo basket transaction system of one of embodiments E1 to E6, further comprising:
   a clearing system (530) connected to said settlement system,
   wherein said clearing system is arranged for generating said settlement instructions relating to repo basket transactions specified by constituting said security basket definition, and sending the generated settlement instructions to said settlement system.
E8. The repo basket transaction system of embodiment E7, wherein said clearing system is arranged for performing a trade margin calculation process based on a risk calculation based on said security basket definition.
E9. The repo basket transaction system of embodiment E8, wherein said risk calculation process is adapted to access an individual average risk profile for each class of securities.
E10. The repo basket transaction system of embodiment E8 or E9, wherein said clearing system is further arranged for sending repo confirmation messages to the trading system prior to said calculation.
E11. The repo basket transaction system of one of embodiments E7 to E10, wherein said clearing system is arranged for determining whether the security basket amount exceeds a predefined threshold, and if so, generating plural settlement instructions each causing said settlement system to allocate amounts not exceeding said threshold.
E12. The repo basket transaction system of one of embodiments E1 to E11, wherein said at least one class of securities comprises at least one of government bonds, mortgaged bonds, and bonds issued by public law corporations.
E13. The repo basket transaction system of one of embodiments E1 to E12, wherein said settlement system is adapted to create a sub-ledger (620) independent from the market participants' general ledger accounts and post the at least one allocated individual security in said sub-ledger.
E14. The repo basket transaction system of embodiment E13, further comprising an earmarking unit (650) for marking the at least one allocated individual security to be posted in said sub-ledger but not in said general ledger accounts.
E15. The repo basket transaction system of embodiment E14, wherein said earmarking unit is adapted to first mark the at least one allocated individual security to be transferred from a first market participant's account to an account of a central counterpart, and then mark the at least one allocated individual security to be transferred from said account of a central counterpart to a second market participant's account.
E16. A settlement system capable of being operated in a repo basket transaction system according to one of embodiments E1 to E15, connected to receive settlement instructions relating to repo basket transactions specified by constituting a security basket definition indicating a security amount and at least one class of securities, comprising:
   a securities pooling and allocation unit (630, 640) adapted to investigate the security basket definition relating to a repo basket transaction and allocate at least one individual security that meets at least one class of securities indicated by the investigated security basket definition.
E17. A repo basket transaction method comprising:
   receiving (700) repo quotes from market participants, the repo quotes specifying a repo basket transaction by constituting a security basket definition indicating a security amount and at least one class of securities;
   investigating (710-730) the security basket definition relating to said repo basket transaction; and
   allocating (735-740) at least one individual security according to given settlement amounts, said at least one individual security meeting at least one class of securities indicated by the investigated security basket definition.
E18. The repo basket transaction method of embodiment E17, adapted to operate the repo basket transaction system according to one of embodiments E1 to E15.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the intended scope of the invention.

For instance, the invention is particularly applicable wherever a transfer and the corresponding reverse transfer are bi-directional transfers (such as, in the specific example of a repo basket trade, a purchase) comprising a transfer of the respective group of resources in one direction (for instance a repo basket) and a transfer of a respective other resource in the opposite direction (for instance cash in the amount of the agreed basket price).

Further, the resource group definition may indicate a quantity of resources (such as a security amount) describing the resource volume of the group of resources.

The predefined rules may specify the manner in which the allocation takes place, for instance dependent on the availability of resources (or securities). It is however to be noted that other rules may likewise be applied.

Preferably, the storage 600 is arranged for storing data indicating the individual resources in association with data indicating the at least one class of resources, and the pooling unit 640 is adapted to access this storage for allowing the allocation 630 to allocate the individual resources based on the predefined rules stroed in unit 610.

It is further to be noted that the resource management system may be capable of controlling the transfer of other resources than resources of the above described groups of resources. The resource allocation unit 640 then stores a first array of resource data to which the other resources are posted after allocation, and further stores a second array to which the individual resources are posted after allocation.

In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A resource management system for controlling the transfer of groups of resources, comprising:
an input unit (520, 530) for receiving transfer instructions, said transfer instructions specifying a transfer of a group of resources by constituting a definition indicating at least one class of resources and at least one condition under which, after the transfer has been completed, a reverse transfer of the same group of resources or another group of resources within the same at least one class of resources has to occur; and
a resource specification unit (540, 630, 640) for investigating said definition and allocating individual resources for said transfer that meet at least one class of resources indicated by the investigated definition.

2. The resource management system of claim 1, wherein said definition further indicates a point of time at which said transfer has to occur.

3. The resource management system of claim 1 or 2, wherein said at least one condition comprises a point of time at which said reverse transfer has to occur.

4. The resource management system of one of claims 1 to 3, wherein each of said transfer and said reverse transfer are bi-directional transfers comprising a transfer of the respective group of resources in one direction and a transfer of a respective additional resource in the opposite direction.

5. The resource management system of claim 4, wherein said definition also indicates the additional resources for said transfer as well as said reverse transfer.

6. The resource management system of one of claims 1 to 5, wherein said definition further indicates a quantity of resources, said quantity describing a resource volume of said group of resources.

7. The resource management system of claim 6, wherein said definition is adapted not to indicate individual resources of said class.

8. The resource management system of one of claims 1 to 7, wherein said resource specification unit is further adapted to allocate said individual resources based on predefined rules.

9. The resource management system of claim 8, wherein said predefined rules specify the manner in which the allocation is dependent on the availability and eligibility of resources.

10. The resource management system of claim 8 or 9, wherein said resource management system further comprises a storage for storing data indicating said individual resources in association with data indicating said at least one class of resources, and said resource specification unit (640) is adapted to access said storage when allocating said individual resources based on said predefined rules.

11. The resource management system of claim 10, wherein said resource management system is connectable to at least two client devices (500, 510), said input unit is arranged for receiving said transfer instructions from said client devices, said storage is arranged for storing said data in client specific memory regions, and said association is a client specific association.

12. The resource management system of one of claims 8 to 11, wherein said resource management system is connectable to at least two client devices (500, 510), said input unit is arranged for receiving said transfer instructions from said client devices, and said predefined rules are standardized general rules or client specific rules.

13. The resource management system of one of claims 1 to 12, further comprising:
a processing unit (530) for generating messages relating to resource group transfers specified by constituting said definition, wherein said resource specification unit is adapted to allocate said individual resources in response to said messages.

14. The resource management system of claim 13, wherein said processing unit is arranged for performing a risk calculation process based on said definition.

15. The resource management system of claim 14, wherein said risk calculation process is adapted to access an individual average risk profile for each class of resources.

16. The resource management system of claim 14 or 15, wherein said processing unit is further arranged for sending transfer confirmation messages to said input unit prior to said calculation.

17. The resource management system of one of claims 13 to 16, wherein said processing unit is adapted for determining whether the amount of resources to be allocated exceeds a predefined threshold, and if so, generating plural messages each causing said resource specification unit to allocate amounts of said individual resources not exceeding said threshold.

18. The resource management system of one of claims 1 to 17, wherein said resource management system is further capable of controlling the transfer of other resources than resources of said groups of resources,
wherein said resource specification unit stores a first array of resource data to which said other resources are posted after allocation, and
wherein said resource specification unit further stores a second array (620) to which said individual resources are posted after allocation.

19. The resource management system of claim 18, further comprising a marking unit (650) for marking the allocated individual resources to be posted in said second array but not in said first array.

20. The resource management system of claim 19, wherein said marking unit is adapted to first mark an allocated individual resource to be transferred from an account pertaining to a first client device to a central account, and then mark the allocated individual resource to be transferred from said central account to an account pertaining to a second client device.

21. A resource management method of controlling the transfer of groups of resources, comprising:
receiving (700) transfer instructions specifying a transfer of a group of resources by constituting a definition indicating at least one class of resources and at least one condition under which, after the transfer has been completed, a reverse transfer of the same group of resources or another group of resources within the same at least one class of resources has to occur;
investigating (710-730) said definition; and
allocating (735-740) individual resources for said transfer that meet said at least one class of resources indicated by the investigated definition.

22. The resource management method of 21, adapted to operate the resource management system according to one of claims 1 to 20.

23. A repo basket transaction system comprising:
a trading system (520, 530) connected to receive repo quotes from market participants (500, 510), the repo quotes specifying a repo basket transaction by constituting a security basket definition indicating a security amount and at least one class of securities; and
a settlement system (540-570) connected to receive settlement instructions relating to repo basket transactions;
wherein said settlement system comprises a securities pooling and allocation unit (630, 640) adapted to investigate the security basket definition relating to a repo basket transaction and allocate at least one individual security that meets at least one class of securities indicated by the investigated security basket definition.

24. A settlement system capable of being operated in a repo basket transaction system according to claim 23, connected to receive settlement instructions relating to repo basket transactions specified by constituting a security basket definition indicating a security amount and at least one class of securities, comprising:
a securities pooling and allocation unit (630, 640) adapted to investigate the security basket definition relating to a repo basket transaction and allocate at least one individual security that meets at least one class of securities indicated by the investigated security basket definition.

25. A repo basket transaction method comprising:
receiving (700) repo quotes from market participants, the repo quotes specifying a repo basket transaction by constituting a security basket definition indicating a security amount and at least one class of securities;
investigating (710-730) the security basket definition relating to said repo basket transaction; and
allocating (735-740) at least one individual security according to given settlement amounts, said at least one individual security meeting at least one class of securities indicated by the investigated security basket definition.

26. A computer readable storage medium storing instructions that, when executed on a computer system, cause the computer system to perform the method of claim 21, 22 or 25.
